# EUROPEAN PATENT APPLICATION

(11) **EP 2 216 308 A1**
(43) Date of publication of application: **11.08.2010**
(21) Application number: 10150926.3
(22) Date of filing: 18.01.2010
(51) Int. Cl.: C04B 35/12, C04B 41/00, C04B 41/50, C04B 41/52, C04B 41/81, C04B 41/85, C04B 41/87

(54) **Treated Refractory Material and Methods of Making**

(30) Priority: 26.01.2009 US 359560
(71) Applicant: General Electric Company, Schenectady, NY 12345 (US)
(72) Inventor: Taber, Wade Albert, Katy, TX 77494 (US); Chen, Wei, Sugar Land, TX 77479 (US); Meschter, Peter Joel, Niskayuna, NY 12309 (US); Shuba, Roman, Niskayuna, NY 12309 (US)
(74) Representative: Szary, Anne Catherine

(57) **Abstract**

A treated refractory material includes a refractory material having a plurality of pores, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing; and a protective material disposed within the plurality of pores of the refractory material, wherein the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

## Description

### BACKGROUND OF THE INVENTION

In a slagging gasifier, solid feedstocks such as coal or coke are partially oxidized at about 1300 to 1600 degrees Celsius to produce a mixture of carbon monoxide, carbon dioxide, hydrogen, and water (often referred to as a 'syngas'). The coal can typically contain up to about 5 to 25 percent by weight of inorganic minerals that combine to form a low viscosity molten slag, which contains silicon oxide, aluminum oxide, calcium oxide, and iron oxide.

The walls of the gasifier are lined with refractory material, which is currently prepared from chromium oxide (Cr₂O₃) grains or a blend of Cr₂O₃ and aluminum oxide grains, formed into bricks and sintered. The refractory material has a connected pore structure and is quite porous (e.g. up to 20% porosity by volume). As the slag flows along the walls of the gasifier, it infiltrates the pores in the refractory material. This infiltration causes refractory degradation through a combination of grain dissolution, grain undercutting and macro-cracking.

An improved treated refractory material for reducing the penetration of liquid slag and an improved method for treating the refractory material would be desirable.

### BRIEF DESCRIPTION OF THE INVENTION

In one embodiment, a treated refractory material comprises: a refractory material having a plurality of pores, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing; and a protective material disposed within the plurality of pores of the refractory material, wherein the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

In another embodiment, an article includes the treated refractory material and can be a pre-formed structure, a monolith, or a combination thereof.

In another embodiment, a process for making a treated refractory body, includes adding a protective material to an existing refractory body comprising a refractory material, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing, and the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

In still another embodiment, a process for making a refractory material includes blending the refractory material with a protective material and/or a precursor of a protective material, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing; and sintering the blend, wherein the precursor material and/or the precursor of the protective material is in elemental or compound form and comprises an element not comprised in the refractory material selected from the group consisting of silicon, rare earth elements, zirconium, titanium, yttrium, magnesium, iron, and blends thereof.

The various embodiments are relatively inexpensive and provide protection to refractory materials from the penetration of slag and extend the service life of refractory material.

### BRIEF DESCRIPTION OF THE DRAWINGS

Figure 1 shows an XRF Si map of the slag penetration of an untreated brick and treated brick described in Example 1.
Figure 2 shows an XRF Fe map of the slag penetration of an untreated brick and treated brick described in Example 1.
Figure 3 shows an XRF Si map of the slag penetration of an untreated brick and treated bricks described in Examples 2-5.
Figure 4 shows the cross sections of the untreated and treated bricks described in Example 6.

### DETAILED DESCRIPTION OF THE INVENTION

Described herein are refractory materials and more particularly, treated refractory materials including protective materials configured to minimize slag penetration. In one embodiment, a treated refractory body comprises a refractory material having a plurality of pores and a protective material disposed within the plurality of pores of the refractory material. As used herein, "refractory material" is generally intended to refer to any suitable material for us in high temperature (e.g., greater than 500 degrees Celsius) systems, such as slagging gasification. Exemplary refractory materials will have chemical and physical properties that make them stable and able to retain strength as structures or components of systems that are exposed to the high temperatures. The refractory materials, therefore, are resistant to thermal shock, chemically stable in the slag and process environment, wear resistant, with high temperature strength, and thermal conductivities and coefficients of thermal expansion suitable for use in the high temperature systems. The refractory materials are further porous and have a connected pore structure, which includes open pores and closed pores. The pores can range in size from about 1 micrometer (µm) to about 200 µm in diameter. In an exemplary embodiment, the refractory material can comprise any type of material suitable for a gasifier lining. Exemplary refractory materials include, without limitation, aluminum oxide, silicon oxide, magnesium oxide, chromium oxide, zirconium oxide, titanium oxide, calcium oxide, fireclay, silicon carbide, tungsten, mullite, dolomite, magnesite, spinel (magnesium aluminum oxide), chromite, magnetite, or a combination comprising at least one of the foregoing.

The refractory material can be formed into a structure (i.e., body) suitable for high temperature systems, such as slagging gasification. In one embodiment, the refractory body can have a preformed shape. A preformed refractory body is a refractory material that has been formed (e.g., pre-cast) into a desired shape and sintered. Exemplary refractory preforms can include, without limitation, bricks, blocks, tiles, and the like. In another embodiment, the refractory material is a non-preformed, loose material which can be formed into complex shapes, or disposed (e.g., sprayed) into a desired place, and are then sintered before use in the high temperature system. In still another embodiment, the refractory material can be sintered in situ. Some non-preformed, un-fired refractory materials are referred to as "monolithics". Exemplary monolithics can include, without limitation, castables, moldables, ramming mixes, gunning mixes, mortars, refractory plastics, combinations thereof, and the like. In one embodiment, the refractory body can form the lining of a slagging gasifier. The lining can be formed from pre-cast bricks, blocks, or tiles, or it can be formed of refractory monolithics. In another embodiment, the lining can comprise both pre-formed and monolithic portions of refractory materials.

The refractory material can be sintered by firing or heat treating the material to a temperature of at least about 1000 degrees Celsius (°C). In one embodiment, the refractory material can be fired at a temperature from about 1000 °C to about 1800 °C. The refractory material can be fired for a time suitable to sinter the material, and can depend on such factors as the material composition, the desired refractory structure, the desired use, and the like. In one embodiment, the refractory material can be fired for at least about 1 hour. In another embodiment, the refractory material can be fired from about 1 hour to about 160 hours; specifically about 1 hour to about 5 hours. The refractory material can be sintered in oxidizing, reducing, or neutral environments. For example the refractory material can be sintered in air or in a nitrogen or argon environment.

In one embodiment, the refractory material comprises chromium oxide. In another embodiment, the refractory material comprises greater than or equal to 40 percent by weight chromium oxide. In another embodiment, the refractory material comprises at least 60 percent by weight chromium oxide.

In another embodiment, the refractory material comprises chromium oxide and aluminum oxide. The refractory material may comprise from about 40 to about 95 percent by weight chromium oxide and from about 5 to about 60 percent by weight aluminum oxide, based on the weight of the refractory material. In one embodiment, the refractory material comprises from about 60 to about 95 percent by weight chromium oxide and from about 5 to about 40 percent by weight aluminum oxide, based on the weight of the refractory material.

In another embodiment, the refractory material comprises chromium oxide, aluminum oxide and zirconium oxide. The refractory material may comprise from about 40 to about 90 percent by weight chromium oxide, from about 5 to about 10 percent by weight zirconium oxide and from about 5 to about 55 percent by weight aluminum oxide, based on the weight of the refractory material. In one embodiment, the refractory material comprises from about 60 to about 90 percent by weight chromium oxide, from about 5 to about 10 percent by weight zirconium oxide and from about 5 to about 35 percent by weight aluminum oxide, based on the weight of the refractory material.

In still another embodiment, the refractory material comprises chromium oxide and magnesium oxide. The refractory material may comprise from about 40 to about 90 percent by weight chromium oxide, from about 5 to about 60 percent by weight magnesium oxide and/or from about 5 to about 40 percent by weight aluminum oxide, based on the weight of the refractory material. In another embodiment, the refractory material is a spinel based mixture comprising from about 5 to about 70 percent by weight magnesium oxide, and from about 5 to about 70 percent by weight aluminum oxide, based on the weight of the refractory material.

The refractory materials further comprise one or more protective materials disposed within the pores of the refractory material. Exemplary protective materials can be selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

The protective materials are chemically compatible with the refractory materials and will not decompose in typical gasifier operating atmospheres of up to about 30 to about 60 atm and at typical gasifier operating temperatures of up to about 1300 to about 1600°C. Exemplary protective materials are any type of material that impedes the infiltration of slag into the refractory material, such as, for example, by decreasing the porosity of the refractory material and producing a complex reaction between the slag and protective material to lower the slag's effective viscosity. As explained above, liquid slag is a low viscosity blend of inorganic oxides that is produced as a by-product in a slagging coal gasifier when the coal or coke is partially oxidized. The slag may contain silica, aluminum oxide, calcium oxide and iron oxide. The slag can infiltrate the pores in the refractory material and degrade the refractory material.

In one embodiment, the protective material comprises material that at least partially fills the pores in the refractory material to prevent the slag from infiltrating the refractory material and/or material that reacts with the infiltrating slag to modify the viscosity or wetting behavior of the slag or to decrease the amount of liquid phase in the slag. In one embodiment, the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

Precursor compounds may be added to the refractory material. Precursor compounds react or decompose to form a metal oxide, metal silicate or metal zirconate. In one embodiment, the precursor compound is in elemental or compound form and comprises an element selected from the group consisting of silicon, rare earth metals, zirconium, titanium, yttrium, magnesium, iron, and blends thereof. In another embodiment, the precursor compounds may be salts of metals to transform into metal oxides, metal silicates or metal zirconates. In another embodiment, salts of the metal compounds include nitrates, acetates, hydroxides, or carbonates. For example, the precursor compounds may be aluminum nitrate, chromium nitrate, silicon nitrate, rare earth nitrates, titanium nitrate, zirconium nitrate, yttrium nitrate, magnesium nitrate, iron nitrate, or blends thereof. In another embodiment, the precursor compounds may be chromium acetate, silicon acetate, rare earth acetates, zirconium acetate, yttrium acetate, or blends thereof.

Rare earth metals are elements from the lanthanide series, such as lanthanum, cerium, praseodymium, neodymium, promethium, samarium, europium, gadolinium, terbium, dysprosium, holmium, erbium, thulium, ytterbium, lutetium and mixtures thereof. The rare earth oxides are oxides of elements from the lanthanide series, such as lanthanum, cerium, praseodymium, neodymium, promethium, samarium, europium, gadolinium, terbium, dysprosium, holmium, erbium, thulium, ytterbium and lutetium. In one embodiment, the rare earth oxide is cerium oxide. In another embodiment, the rare earth oxides may be a mixture or alloy of rare earth oxides.

Rare earth zirconates are zirconates that have a formula of RE₂Zr₂O₇, where RE is a rare earth element from the lanthanide series, such as lanthanum, cerium, praseodymium, neodymium, promethium, samarium, europium, gadolinium, terbium, dysprosium, holmium, erbium, thulium, ytterbium and lutetium. In one embodiment, the rare earth zirconate is cerium zirconate, gadolinium zirconate, lanthanum zirconate or neodymium zirconate.

The protective materials may comprise blends. In one embodiment, the protective material may comprise a blend of aluminum oxide and silica. In another embodiment, the protective material may comprise a blend of magnesium oxide and iron oxide. In another embodiment, the protective material may comprise a blend of aluminum oxide, chromium oxide, iron oxide and magnesium oxide. When blends of protective materials are employed, the compounds may be added to the refractory material together or separately.

The amounts of each component in the blend may be in any amount from 0 to 100 percent by weight based on the weight of the blend. For example, in one embodiment the blend of aluminum oxide and silica comprises from about 10 to about 90 percent by weight of aluminum oxide and from about 10 to about 90 percent by weight silica based on the weight of the blend. In another embodiment, the blend of aluminum oxide and silica comprises from about 20 to about 80 percent by weight of aluminum oxide and from about 20 to about 80 percent by weight silica, based on the weight of the blend. In another embodiment, the blend of aluminum oxide and silica comprises from about 40 to about 60 percent by weight of aluminum oxide and from about 40 to about 60 percent by weight silica, based on the weight of the blend.

The magnesium oxide and iron oxide combination comprises from about 10 to about 90 percent by weight magnesium oxide and from about 10 to about 90 percent by weight iron oxide, based on the weight of the combination. In another embodiment, the magnesium oxide and iron oxide combination comprises from about 30 to about 70 percent by weight magnesium oxide and from about 30 to about 70 percent by weight iron oxide, based on the weight of the combination. In another embodiment, the magnesium oxide and iron oxide combination comprises from about 40 to about 60 percent by weight magnesium oxide and from about 40 to about 60 percent by weight iron oxide, based on the weight of the combination.

In one embodiment, the blend of aluminum oxide, chromium oxide, iron oxide and magnesium oxide comprises from about 1 to about 50 percent by weight aluminum oxide, from about 1 to about 50 percent by weight chromium oxide, from about 1 to about 50 percent by weight iron oxide and from about 1 to about 50 percent by weight magnesium oxide, based on the weight of the blend.

The protective material may be added to the pores of the porous refractory material by infiltrating the protective material into the refractory material and dispersing the material into the pores. The protective material infiltrates the refractory material by any method known in the art, such as painting, spraying, dipping, coating or vacuum infiltration. In one embodiment, the protective material infiltrates the refractory material as a suspension, slurry or liquid solution. The protective material may be a precursor compound, such as a salt, and is dispersed in a solvent, such as water, an alcohol or other type of solvent. In one embodiment, the precursor material may be a nitrate or acetate salt. In another embodiment, the precursor may be a rare earth metal and dissolved in acid to form a solution. The suspension, slurry, liquid solution, or molten salt penetrates into the refractory material depositing the protective material throughout the pores of the porous refractory material. The refractory material is heat treated to evaporate or decompose the solvent and transform the precursor into the protective material leaving the protective material situated throughout the open pores of the refractory material. For example, chromium nitrate or aluminum nitrate is infiltrated into the refractory material and heat treated to leave chromium oxide or aluminum oxide situated in the pores of the refractory material. The heat treatment to evaporate or decompose the solvent and transform the precursor into the protective material is at a temperature in a range of from about 100 °C to about 1500 °C from about 1 hour to about 10 hours. In another embodiment, the heat treatment is at a temperature in a range of from about 300 °C to about 500 °C from about 1 to about 5 hours.

The protective material may infiltrate the refractory material in the form of a powder. The powder may comprise micron-sized or nano-sized particles. In one embodiment, the particle sizes range from about 5 nanometers (nm) to about 200 µm. In another embodiment, the particle sizes range from about 5 nm to about 100 µm. In another embodiment, the powder comprises particles ranging in size from about 1 µm to about 10 µm. In another embodiment, the particle sizes range from about 1 µm to about 2 µm. In one embodiment, the protective material comprises nano-sized particles. In one embodiment, the protective material comprises particle sizes from about 5 nm to about 100 nm. In another embodiment, the protective material comprises a particle size from about 5 nm to about 10 nm. Nano-sized powders are infiltrated as colloid solutions with typical solid loadings of about 10 to about 50 percent by weight. The colloid solution may be an aqueous suspension and may contain surfactants to aid in dispersing the particles.

In another embodiment, the protective material is dispersed by vacuum infiltration. For example, an existing preformed refractory body, such as a sintered brick or an as-fabricated brick, can be placed under vacuum. A solution or suspension of the protective material is admitted to penetrate the pores of the refractory material of the refractory body and the vacuum is released. In an alternative embodiment, the refractory body can first be immersed in the suspension or solution and a vacuum applied. The solution or suspension infiltrates the refractory material as the vacuum is applied. Air pressure may assist to produce further infiltration. In a further embodiment, the solution or suspension is admitted into the material by infiltration at atmospheric pressure.

In one embodiment, the amount of protective material comprises from about 2 to about 20 percent by volume based on the total volume of the refractory material. The protective material infiltrates the refractory material to partially fill the pores of the refractory material. In one embodiment, the protective material fills from about 3 percent to about 60 percent of the pore volume. In another embodiment, the protective material infiltrates the refractive material to fill from about 20 percent to about 50 percent of the pore volume. In one embodiment, the protective material at least partially coats the inner surfaces of the pores and forms a sacrificial barrier within the pores to inhibit the penetration of liquid slag into the refractory material.

The refractory material may be treated with the protective material before or after the refractory material has been assembled into a gasifier. In one embodiment, the protective material is applied as a final coating to the refractory material lining the walls of the gasifier. The treated refractory brick retains the mechanical and physical properties of the as-fabricated brick.

The treated refractory material minimizes the penetration of liquid slag into the refractory material. In one embodiment, as the slag begins to penetrate the surface pores of the refractory material, the liquid slag encounters the protective materials disposed within the pores. The liquid slag reacts with the protective materials to create either a high-melting phase or phases or a high-viscosity liquid. In either case, further penetration of the liquid slag is suppressed. Creation of a high-melting phase or phases reduces the volume of liquid phase and minimizes slag penetration into the refractory material. Increasing the viscosity also inhibits penetration of the liquid slag deeper into the refractory material. For example, in one embodiment, aluminum oxide is disposed within pores of the refractory material. When the infiltrating slag contacts the aluminum oxide, the slag/oxide reaction precipitates higher-melting phases, such as anorthite, and reduces the volume of liquid phase available for penetration into the refractory material.

In another embodiment, when fine particles of silica are disposed within pores of the refractory material, the slag will become enriched in silica. The addition of silica increases the viscosity of the liquid slag. Such an increased viscosity inhibits slag penetration into the refractory material.

A combination of approaches can be used to both increase the viscosity and raise the melting temperature of the liquid slag. In one embodiment, the protective infiltrant is a blend of aluminum oxide and silica. The aluminum oxide causes precipitation of higher-melting phases and the silica increases the viscosity of the remaining liquid slag.

In another embodiment, the protective material minimizes the penetration of the slag into the refractory material by filling openings between grains of the refractory material. For example, chromium oxide is resistant to dissolution in slag, but reduces the permeability of the refractory material by filling channels between grains with relatively inert material.

In another embodiment, a process for making a treated refractory body comprises adding one or more protective materials to an existing refractory body, wherein the protective materials enter the pores of porous sintered refractory material of the refractory body, wherein the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

As explained above, the protective material is added to the refractory material by infiltrating the protective material into the refractory material and dispersing the material into the pores. The protective material infiltrates the refractory material by any method known in the art, such as painting, spraying, dipping, coating or vacuum infiltration. The protective material may be a precursor compound, such as a salt, and is dispersed in a solvent, such as water, an alcohol or other type of solvent. In one embodiment, the precursor material may be a nitrate or acetate salt. In another embodiment, the precursor material may be a metal, dissolved in acid to form a solution.

In another embodiment, a process for making treated refractory material comprises blending refractory material and one or more protective materials and sintering the blend, wherein the protective material is selected from the group consisting of silica, rare earth oxides, rare earth zirconates, titanium oxide, mullite, zirconium silicate, yttrium oxide, magnesium oxide, iron oxide, and blends thereof.

In another embodiment, a process for making treated refractory material comprises blending the refractory material and a protective material and/or a precursor of a protective material and sintering the blend, wherein the protective material and/or the precursor material is in elemental or compound form and comprises an element selected from the group consisting of silicon, rare earth elements, zirconium, titanium, yttrium, magnesium, iron, and blends thereof.

As explained above, precursor compounds react or decompose to form a metal oxide, metal silicate or metal zirconate. In one embodiment, the precursor compounds may be salts that can be transformed into the metal oxides, metal silicates or metal zirconates upon heat treatment. In another embodiment, salts of the metal compounds include nitrates and acetates.

The protective material is blended with the refractory material in any amount that is suitable for treating the refractory material. In one embodiment, the protective material is added in amount of from about 1 to about 10 percent by weight based on the weight of the blend. In another embodiment, the protective material is added in amount of from about 5 to about 10 percent by weight based on the weight of the blend.

The blend of refractory material and protective material may be formed into any desired shape. In one embodiment, the refractory material is formed into a pre-cast shape, such as a brick, block, tile, or the like. In another embodiment, the refractory material is a monolithic. In still another embodiment, the refractory material has both pre-formed and monolithic portions. The blend of refractory material and protective material is sintered by firing or heat treating the material to a temperature of at least about 1000°C. In one embodiment, the material is fired at a temperature from about 1000°C to about 1800°C. In one embodiment, the refractory material is fired for at least about 1 hour. In another embodiment, the refractory material is fired from about 1 hour to about 24 hours. The refractory material may be sintered in air or in a nitrogen or argon environment.

The treated refractory materials can impart some measure of self-healing. If the surface layers of the refractory material are removed, the underlying protective material disposed within the refractory material will again react with the slag to reform a renewed protective layer against further infiltration of slag.

In order that those skilled in the art will be better able to practice the present disclosure, the following examples are given by way of illustration and not by way of limitation.

### EXAMPLES

### Example 1

A sintered high chromia (90 wt %) brick was infiltrated with chromium (III) nitrate solution multiple times followed by subsequent heat treatments in air at 600°C for 2 hours to decompose the nitrate salt into chromium oxide. The weight of the protective material constituted approximately 10 percent by weight of the refractory brick after all infiltrations. The infiltrated brick was then annealed in nitrogen at 1600°C for 20 hours to pre-react the chromium oxide before the slag infiltration. The porosity of the untreated refractory before the slag infiltration was about 18-20 vol. %. After infiltration and heat treatment, the porosity was about 12-14 vol. %.

A slag infiltration test via isothermal annealing of cups filled with slag was performed on the brick infiltrated with chromium oxide and on an untreated brick. The slag composition contained 59.0% silica, 10.7% aluminum oxide, 8.3% calcium oxide, 21.6% iron oxide and 0.3% potassium oxide. Test parameters were 1490°C for 20 hours at an oxygen partial pressure of 10^-10 atm provided via a mixture of wet and dry N₂/3%H₂ gas.

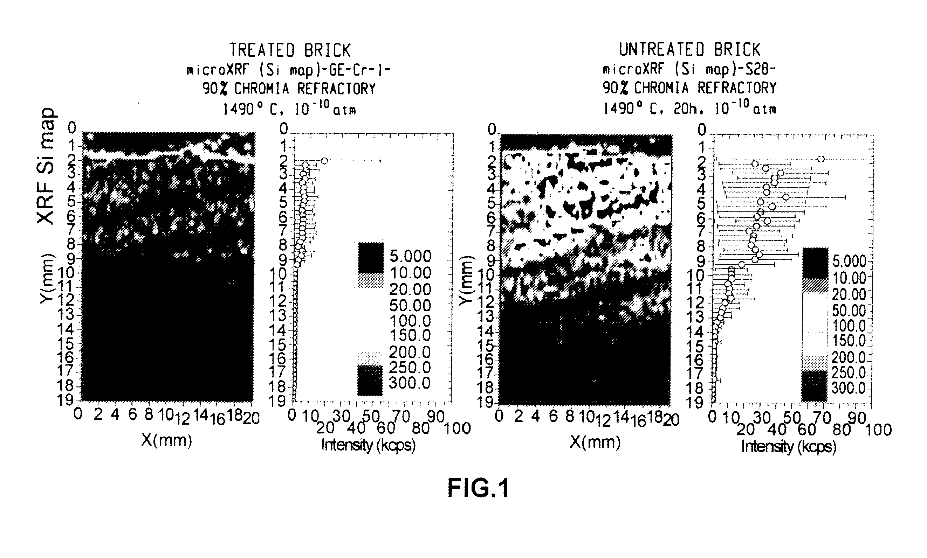

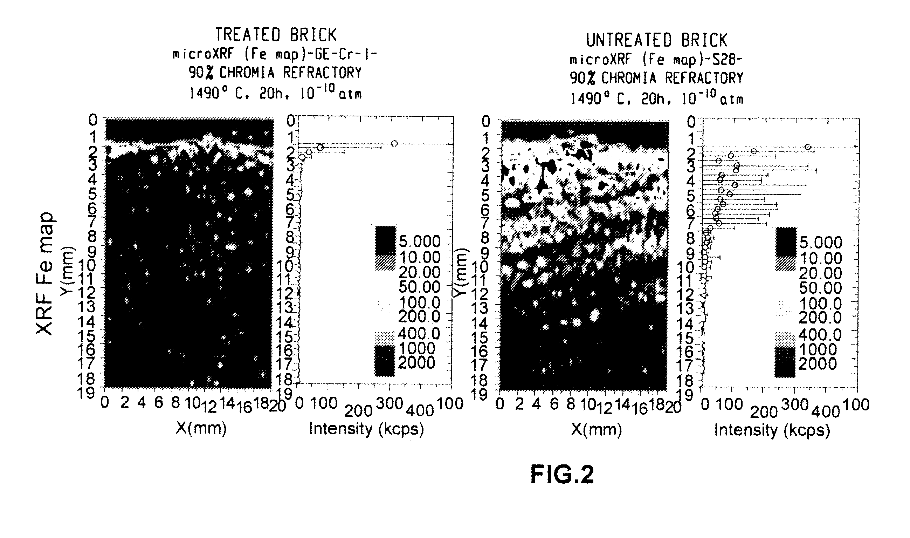

Subsequent analysis of slag penetration by XRF mapping of Si and Fe distribution at the brick cross-section revealed that slag penetration in the treated brick is much less than the slag penetration into the untreated brick. Figure 1 shows an XRF mapping of Si of the slag penetration of the untreated sintered brick and the treated brick. Figure 2 shows an XRF mapping of Fe of the slag penetration of the untreated brick and the treated brick.

### Example 2.

Example 1 was reproduced with the exception of using chromium (III) acetate (Cr₃(OH)₃(CH₃COO)₂ as the precursor to the chromium oxide protective material. A slag infiltration test via isothermal annealing of cups filled with slag was performed on the brick infiltrated with chromium oxide and on an untreated brick. Test parameters were 1500°C for 20 hours at an oxygen partial pressure of 10^-10 atm provided via a mixture of wet and dry N₂/3%H₂ gas.

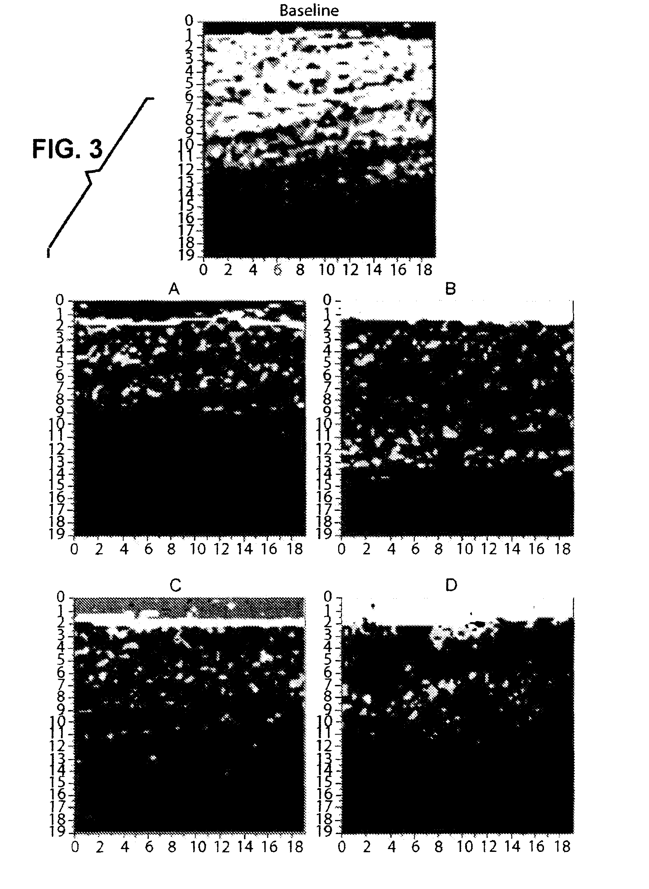

Subsequent analysis of slag penetration by XRF mapping of Si distribution at the brick cross-section revealed that slag penetration in the treated brick is much less than the slag penetration in the untreated brick. Figure 3A shows an XRF mapping of Si of the slag penetration of the untreated brick and the brick treated with chromium oxide.

### Example 3.

Example 1 was reproduced with the exception of using aluminum nitrate as the precursor for the aluminum oxide protective material. A slag infiltration test via isothermal annealing of cups filled with slag was performed on the brick infiltrated with aluminum oxide and on an untreated brick. Test parameters were 1500°C for 20 hours at an oxygen partial pressure of 10^-10 atm provided via a mixture of wet and dry N₂/3%H₂ gas.

Subsequent analysis of slag penetration by XRF mapping of Si distribution at the brick cross-section revealed that slag penetration in the treated brick is much less than the slag penetration in the untreated baseline brick. Figure 3B shows an XRF mapping of Si of the slag penetration of the untreated brick and the brick treated with aluminum oxide.

### Example 4.

Example 1 was reproduced with the exception of using cerium nitrate as the precursor for the cerium oxide protective material. A slag infiltration test via isothermal annealing of cups filled with slag was performed on the brick infiltrated with cerium oxide and on an untreated baseline brick. Test parameters were 1500°C for 20 hours at an oxygen partial pressure of 10^-10 atm provided via a mixture of wet and dry N₂/3%H₂ gas.

Subsequent analysis of slag penetration by XRF mapping of Si distribution at the brick cross-section revealed that slag penetration in the treated brick is much less than the slag penetration in the untreated brick. Figure 3C shows an XRF mapping of Si of the slag penetration of the untreated brick and the brick treated with cerium oxide.

### Example 5.

Example 1 was reproduced with the exception of using gadolinium nitrate and zirconium nitrate as the precursors for the gadolinium zirconate protective material. A slag infiltration test via isothermal annealing cups filled with slag was performed on the brick infiltrated with gadolinium zirconium oxide and on an untreated baseline brick. Test parameters were 1500°C for 20 hours at an oxygen partial pressure of 10^-10 atm provided via a mixture of wet and dry N₂/3%H₂ gas.

Subsequent analysis of slag penetration by XRF mapping of Si distribution at the brick cross-section revealed that slag penetration in the treated brick is much less than the slag penetration in the untreated baseline brick. Figure 3D shows an XRF mapping of Si of the slag penetration of the untreated brick and the brick treated with gadolinium zirconate.

### Example 6.

A fused-cast and sintered brick of 75% weight chromia was vacuum infiltrated multiple times with a colloidal suspension of nano-scale particles of Al₂O₃ having particle sizes of about 50 nm. After each infiltration, the brick was heated to 800°C for 4 hours in air to decompose the dispersant. The same refractory brick was subsequently vacuum infiltrated multiple times with a colloidal suspension of nano-scale particles of SiO₂ having particle sizes of about 12 nm. Between each of the SiO₂ infiltrations the brick was heated to 120°C for 2 hours to remove water.

A slag infiltration test via isothermal annealing of cups filled with slag was performed on the brick infiltrated with aluminum oxide and silica. The slag infiltration test was also performed on an untreated brick. Test parameters were 1500°C for 20 hours at an oxygen partial pressure of 10^-10 atm provided via a mixture of wet and dry N₂/3%H₂ gas.

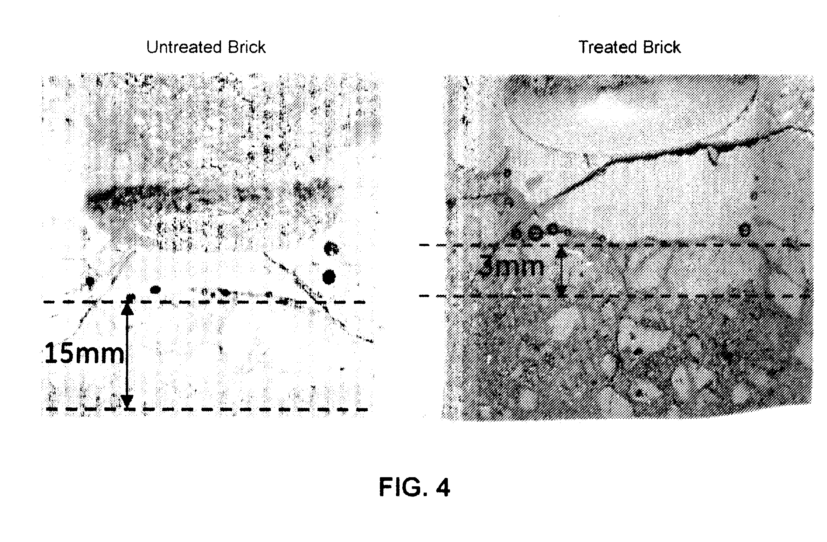

The treated brick clearly shows reduced slag infiltration from 15 mm to 3 mm slag-penetration when compared with the untreated brick at the brick cross-section. The cross sections of the untreated brick and the treated brick at an oxygen partial pressure of 10^-10 atm provided via a mixture of wet and dry N₂/3%H₂ gas are shown in Figure 4. The treated brick clearly shows reduced slag infiltration from 15 mm to 3 mm 15 slag penetration when compared with the untreated brick at the brick cross-section. The cross sections of the untreated brick and the treated brick are shown in Figure 4.

As used herein, the oxidation state of the elements used can vary. The mention of the oxide of any element in one oxidation state includes oxides of this element in all existing oxidation states. For instance, cerium oxide includes Ce₂O₃ and CeO₂, iron oxide includes FeO and Fe₂O₃ and chromium oxide includes Cr₂O₃ and CrO.

The terminology used herein is for the purpose of describing particular embodiments only and is not intended to be limiting of the invention. Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

Unless otherwise defined, all terms (including technical and scientific terms) used herein have the same meaning as commonly understood by one of ordinary skill in the art to which the embodiments of the invention belong. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

For completeness, various aspects of the invention are now set out in the following numbered clauses:
1. A treated refractory material, comprising:
   a refractory material having a plurality of pores, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing; and
   a protective material disposed within the plurality of pores of the refractory material, wherein the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.
2. The treated refractory material of clause 1, wherein the rare earth oxides comprise oxides of rare earth elements selected from the group consisting of lanthanum, cerium, praseodymium, neodymium, promethium, samarium, europium, gadolinium, terbium, dysprosium, holmium, erbium, thulium, ytterbium and lutetium.
3. The treated refractory material of clause 1, wherein the rare earth zirconate has a formula of RE₂Zr₂O₇, where RE is a rare earth element selected from the group consisting of lanthanum, cerium, praseodymium, neodymium, promethium, samarium, europium, gadolinium, terbium, dysprosium, holmium, erbium and ytterbium.
4. The treated refractory material of clause 1, wherein the protective material fills from about 3 to about 60 percent of the volume of the plurality of pores in the refractory material.
5. The treated refractory material of clause 1, wherein the protective material is a powder.
6. The treated refractory material of clause 5, wherein the protective material has a particle size in the range of from about 5 nm to about 200 µm.
7. The treated refractory material of clause 1, wherein an amount of the protective material comprises from about 2 to about 20 percent by volume based on the total volume of the refractory material.
8. An article comprising the treated refractory material of clause 1.
9. The article of clause 8, wherein the article comprises a pre-formed structure.
10. The article of clause 9, wherein the pre-formed structure comprises a brick, block, tile, or a combination comprising at least one of the foregoing.
11. The article of clause 8, wherein the article comprises a monolithic.
12. The article of clause 11, wherein the monolith comprises a castable, moldable, ramming mix, gunning mix, mortar, refractory plastic, or combination comprising at least one of the foregoing.
13. The article of clause 1, wherein the article comprises a combination of a pre-formed structure and a monolithic portion.
14. A process for making a treated refractory body, comprising:
   adding a protective material to an existing refractory body comprising a refractory material, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing, and the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.
15. The process of clause 14, further comprising forming the existing refractory body and sintering the existing refractory body, wherein the body comprises a brick, block, tile, or a combination comprising at least one of the foregoing.
16. The process of clause 14, wherein the rare earth oxides comprise oxides of rare earth elements selected from the group consisting of lanthanum, cerium, praseodymium, neodymium, promethium, samarium, europium, gadolinium, terbium, dysprosium, holmium, erbium, thulium, ytterbium and lutetium.
17. The process of clause 14, wherein the rare earth zirconate has a formula of RE₂Zr₂O₇ where RE is a rare earth element selected from the group consisting of lanthanum, cerium, praseodymium, neodymium, promethium, samarium, europium, gadolinium, terbium, dysprosium, holmium, erbium and ytterbium.
18. The process of clause 14, wherein the protective material is added to a plurality of pores in the refractory material by painting, spraying, dipping, coating or vacuum infiltration.
19. The process of clause 14, further comprising sintering the treated refractory body, wherein the refractory material and the protective material do not comprise the same compounds.
20. The process of clause 18, further comprising forming a slurry comprising the protective material before adding the protective material to the refractory material.
21. The process of clause 14, wherein the protective material is added to the refractory material after the refractory material has been disposed in a gasifier.
22. A process for making a treated refractory material comprising:
   blending a refractory material with a protective material and/or a precursor of a protective material, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing, and
   sintering the blend, wherein the protective material and/or the precursor of the protective material is in elemental or compound form and comprises an element not comprised in the refractory material selected from the group consisting of silicon, rare earth elements, zirconium, titanium, yttrium, magnesium, iron, and blends thereof.
23. The process of clause 22, wherein the protective material is added in an amount of from about 1 to about 10 percent by weight based on the weight of the blend.
24. The process of clause 22, further comprising forming the blend into a selected one or both of a pre-formed structure and a monolith and sintering the blend at a temperature from about 1000°C to about 1800°C for about 1 to about 160 hours.

## Claims

1. A treated refractory material, comprising:
a refractory material having a plurality of pores, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing; and
a protective material disposed within the plurality of pores of the refractory material, wherein the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

2. The treated refractory material of claim 1, wherein the rare earth oxides comprise oxides of rare earth elements selected from the group consisting of lanthanum, cerium, praseodymium, neodymium, promethium, samarium, europium, gadolinium, terbium, dysprosium, holmium, erbium, thulium, ytterbium and lutetium.

3. The treated refractory material of claim 1 or claim 2, wherein the rare earth zirconate has a formula of RE₂Zr₂O₇, where RE is a rare earth element selected from the group consisting of lanthanum, cerium, praseodymium, neodymium, promethium, samarium, europium, gadolinium, terbium, dysprosium, holmium, erbium and ytterbium.

4. The treated refractory material of any preceding claim, wherein the protective material fills from about 3 to about 60 percent of the volume of the plurality of pores in the refractory material.

5. The treated refractory material of any preceding claim, wherein the protective material is a powder.

6. The treated refractory material of any preceding claim, wherein the protective material has a particle size in the range of from about 5 nm to about 200 µm.

7. The treated refractory material of any preceding claim, wherein an amount of the protective material comprises from about 2 to about 20 percent by volume based on the total volume of the refractory material.

8. A process for making a treated refractory body, comprising:
adding a protective material to an existing refractory body comprising a refractory material, wherein the refractory material comprises aluminum oxide, silicon oxide, magnesium oxide, chromium oxide, zirconium oxide, titanium oxide, calcium oxide, fireclay, silicon carbide, tungsten, mullite, dolomite, magnesite, magnesium aluminum oxide, chromite, magnetite, or a combination comprising at least one of the foregoing, and the protective material is selected from the group consisting of aluminum oxide, chromium oxide, silica, rare earth oxides, rare earth zirconates, titanium oxide, mullite, zirconium oxide, zirconium silicate, yttrium oxide, magnesium oxide, iron oxide, and blends thereof.

9. The process of claim 8, further comprising forming the existing refractory body and sintering the existing refractory body, wherein the body comprises a brick, block, tile, or a combination comprising at least one of the foregoing.

10. The process of claim 8 or claim 9, wherein the rare earth oxides comprise oxides of rare earth elements selected from the group consisting of lanthanum, cerium, praseodymium, neodymium, promethium, samarium, europium, gadolinium, terbium, dysprosium, holmium, erbium, thulium, ytterbium and lutetium.

11. The process of any one of claims 8 to 10, wherein the rare earth zirconate has a formula of RE₂Zr₂O₇ where RE is a rare earth element selected from the group consisting of lanthanum, cerium, praseodymium, neodymium, promethium, samarium, europium, gadolinium, terbium, dysprosium, holmium, erbium and ytterbium.

12. The process of any one of claims 8 to 11, wherein the protective material is added to a plurality of pores in the refractory material by painting, spraying, dipping, coating or vacuum infiltration.

13. The process of any one of claims 8 to 12, further comprising sintering the treated refractory body, wherein the refractory material and the protective material do not comprise the same compounds.

14. The process of any one of claims 8 to 13, further comprising forming a slurry comprising the protective material before adding the protective material to the refractory material.

15. The process of any one of claims 8 to 14, wherein the protective material is added to the refractory material after the refractory material has been disposed in a gasifier.
